# EUROPÄISCHE PATENTANMELDUNG

(11) **EP 1 084 789 A2**
(43) Veröffentlichungstag der Anmeldung: **21.03.2001**
(21) Anmeldenummer: 00119940.5
(22) Anmeldetag: 13.09.2000
(51) Int. Cl.: B23K 26/14

(54) **Verfahren und Vorrichtung zum Schutzgas-Hybridschweissen**

(30) Priorität: 16.09.1999 DE 19944466
(71) Anmelder: Linde Gas Aktiengesellschaft, 82049 Höllriegelskreuth (DE)
(72) Erfinder: Trube, Stefan, Dr. Dipl.-Ing., 35745 Herborn-Guntersdorf (DE); Miklos, Ernst, Dipl.-Ing., 82327 Tutzing (DE); Scholz, Jürgen, Dipl-Ing., 81379 München (DE)
(74) Vertreter: Obermüller, Bernhard

(57) **Zusammenfassung**

Die Erfindung betrifft ein Hybridschweißen aus einer Kombination des Laserstrahlschweißens mit dem Schutzgasschweißen mit elektrischem Lichtbogen. Erfindungsgemäß werden zumindestens zwei Elektroden eingesetzt. Es können abschmelzende und/oder nicht-abschmelzende Elektroden in beliebiger Kombination verwendet werden. Die Elektroden können entweder von einem gemeinsamen Schutzgasmantel oder jeweils separat oder in Gruppen von Schutzgas umströmt werden. Die Erfindung erhöht die Einflußmöglichkeit auf den Schweißprozeß und ergibt insbesondere verbesserte Automatisierungsmöglichkeiten.

## Beschreibung

Die Erfindung betrifft ein Verfahren zum Schutzgas-Hybridschweißen mittels Laserstrahl und Lichtbogen, wobei zumindest ein fokussierter Laserstrahl auf das zu bearbeitende, relativbewegte Werkstück geleitet wird und ein elektrischer Lichtbogen durch zumindest eine Elektrode unter Schutzgas erzeugt wird.

Die Erfindung betrifft ferner eine Vorrichtung zum Schutzgas-Hybridschweißen mittels Laserstrahl und Lichtbogen, umfassend einen Laserschweißkopf zum Zuleiten zumindest eines fokussierten Laserstrahls auf das zu bearbeitende Werkstück, einem Schweißbrenner zur Erzeugung eines elektrischen Lichtbogens mittels einer Elektrode, Mittel zur Zufuhr von Schutzgas und Mittel zur Erzeugung einer Relativbewegung zwischen einerseits dem Laserschweißkopf und dem Brenner und andererseits dem Werkstück.

Laserstrahl- und Lichtbogenschweißverfahren sind mit einem breiten Einsatzfeld in der industriellen Fertigung etabliert. Beide Verfahren haben ihre spezifischen Anwendungen, die durch die physikalischen Prozesse des jeweiligen Energietransports zum Werkstoff und die erreichten Energieflüsse gekennzeichnet werden.

Charakteristisch beim Laserstrahlschweißen ist die geringe Einbringung von Energie in den Werkstoff bei hohen Bearbeitungsgeschwindigkeiten, was zu einer vergleichbar schmalen wärmebeeinflußten Zone mit einem großen Verhältnis von Einschweißtiefe zu Nahtbreite führt. Allerdings ist beim Laserstrahlschweißen die erzielbare Spaltüberbrückbarkeit aufgrund des kleinen Strahldurchmessers der Laserstrahlung gering.

Der Lichtbogenschweißprozeß führt aufgrund der wesentlich kleineren Energiedichte zu geringeren Bearbeitungsgeschwindigkeiten. Außerdem ist der Brennfleck des Lichtbogens an der Werkstückoberfläche größer als beim Laserstrahl. Als Folge ergeben sich beim Lichtbogenschweißen breitere Nähte als beim Laserstrahlschweißen, so daß bei einer vergleichbaren Schweißnahttiefe die Spaltüberbrückbarkeit größer ist.

Seit einiger Zeit wird versucht, das Laserstrahlschweißen mit dem Lichtbogenschweißen zu kombinieren. Dabei sind grundsätzlich zwei Verfahrensvarianten denkbar. Die erste Möglichkeit stellt die serielle Prozeßführung dar. Dabei wirken Laserstrahl und Lichtbogen in der Regel zeitlich und örtlich getrennt auf das Werkstück.

Die zweite Verfahrensvariante wird als sog. Hybridschweißen bezeichnet. Dabei wirken Laserstrahl und Lichtbogen (MSG, WIG oder Plasma) zeitgleich in der Wechselwirkungszone (Plasma und Schmelze) und beeinflussen oder unterstützen sich gegenseitig.

Die Erfindung setzt sich mit dem Hybridschweißen unter Schutzgas auseinander, wo im wesentlichen auf die selbe Stelle am Werkstück die Laserstrahlung und der Lichtbogen auftreffen. Beim Hybridschweißen führt der Lichtbogen dem Schweißgut im oberen Nahtbereich zusätzlich zum Laserstrahl Wärme zu, was zu einer kelchförmigen Gestaltung der Schweißnaht führt. Die wechselseitige Beeinflussung der Prozesse erlaubt je nach dem eingesetzten Laserschweiß- oder Lichtbogenverfahren und den dabei eingestellten Prozeßparametern unterschiedliche Ausprägungen und Ausrichtungen. Die Wärmebelastung des Werkstücks beim Hybridschweißen kann ähnlich wie beim Laserstrahlschweißen relativ gering gehalten werden. Je nach dem Verhältnis der Leistungsbeiträge durch Laserstrahlung oder Lichtbogen überwiegt der Charakter des jeweiligen Verfahrens beim Hybridschweißen.

Das Hybridschweißen unter Einsatz von Schutzgasen ist beispielsweise in mehreren Varianten in der DE 43 34 568 A1 beschrieben.

Bei den bekannten Kombinationen von Laser- und Schutzgasschweißverfahren in der Hybridtechnologie sind nur geringe Einflußmöglichkeiten auf den Schweißprozeß gegeben. Insbesondere bestehen durch die unsymmetrische Anordnung von Einzelelektrode und Laserstrahl nur eingeschränkte Automatisierungsmöglichkeiten.

Auftretende Abweichungen der relativen Positionen der beiden Energiequellen zueinander und/oder zum Werkstück schränken die Reproduzierbarkeit des Schweißprozesses ein oder führen zu ungleichmäßiger Qualität.

Der Erfindung liegt daher die Aufgabe zugrunde, ein Verfahren und eine Vorrichtung der eingangs genannten Art aufzuzeigen, durch welche eine erhöhte Einflußmöglichkeit auf den Schweißprozeß gegeben ist und insbesondere eine verbesserte Automatisierungsmöglichkeit geschaffen wird. Außerdem sollte ein Schutzgas-Hybridschweißen mit guter Qualität aufgrund seiner Reproduzierbarkeit und Prozeßsicherheit ermöglicht werden.

Die Aufgabe wird erfindungsgemäß dadurch gelöst, daß zumindest zwei Elektroden eingesetzt werden.

Durch die Erhöhung der Elektrodenzahl auf zwei oder mehrere Elektroden werden die Einflußmöglichkeiten auf den Schweißprozeß wesentlich erhöht. Zum einen ergibt sich eine bessere und reproduzierbare Nahtqualität, was sich einerseits in einer verbesserten Einbrandgeometrie und andererseits an einer verbesserten Nahtoberfläche zeigt. Zum anderen wird durch getrennte Potentiale eine gezielte Wärmeeinbringung ermöglicht. Sowohl eine richtungsabhängige als auch eine richtungsunabhängige Energieeinbringung ist möglich.

Im Rahmen der Erfindung können abschmelzende und/oder nicht-abschmelzende Elektroden verwendet werden. Beim Einsatz von abschmelzenden Elektroden sind höhere Abschmelzleistungen möglich. Ferner sind unterschiedliche Zusatzwerkstoffe einsetzbar. Grundsätzlich sind abschmelzende und nicht-abschmelzende Elektroden innerhalb der Erfindung beliebig miteinander kombinierbar.

In Ausgestaltung der Erfindung wird jede Elektrode von einem separaten Schutzgasmantel umströmt.

Alternativ können mehrere Elektroden von einem gemeinsamen Schutzgasmantel umströmt werden. Dabei ist es insbeondere auch möglich, daß alle Elektroden von einem gemeinsamen Schutzgasmantel umströmt werden.

Als Gase können alle bekannten Schutzgase oder Schutzgasgemische verwendet werden, wobei zusätzlich Prozeßgase oder Prozeßgasgemische zugeführt werden können. Bei der Gaszufuhr können Elektroden zu Gruppen zusammengefaßt werden.

In Ausgestaltung der Erfindung werden die Elektroden an einem elektrischen Potential und/oder an getrennten elektrischen Potentialen angeschlossen. Insbesondere können Gruppen von Elektroden an einem elektrischen Potential angeschlossen werden.

In Weiterbildung der Erfindung werden die Elektroden in denselben und/oder unterschiedlichen Ebenen senkrecht zur Laserstrahlachse und/oder parallel zur Werkstückoberfläche angeordnet. Unter Ebenen parallel zur Werkstückoberfläche werden bei unebenen Werkstückoberflächen im wesentlichen parallel zur Werkstückoberfläche Ebenen verstanden, in denen der Richtungsvektor der Vorzugsrichtung der Relativbewegung liegt. Insbesondere können die Elektroden in Ebenen mit unterschiedlichem Abstand zum Bearbeitungspunkt auf der Werkstückoberfläche angeordnet werden. Durch die Anordnung der Elektroden kann auf das Einbrandprofil Einfluß genommen werden.

Der oder ein Lichtbogen kann zwischen einer Elektrode oder mehreren Elektroden und dem Werkstück und/oder zwischen Elektroden brennen.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit im wesentlichen auf die Werkstückoberfläche fokussierter Laserstrahlung kann die Erfindung auch bei der selten benutzten Variante mit auf die Werkstückoberfläche defokussierter Strahlung Anwendung finden.

Die Erfindung ist grundsätzlich nicht auf den Einsatz von speziellen Arten von Lasern beschränkt. Vor allem eignen sich für das Laserstrahlschweißen CO₂-Laser, Nd:YAG-Laser oder auch Diodenlaser, insbesondere Hochleistungsdiodenlaser (HDL).

## Patentansprüche

1. Verfahren zum Schutzgas-Hybridschweißen mittels Laserstrahl und Lichtbogen, wobei zumindest ein fokussierter Laserstrahl auf das zu bearbeitende, relativbewegte Werkstück geleitet wird und ein elektrischer Lichtbogen durch zumindest eine Elektrode unter Schutzgas erzeugt wird, **dadurch gekennzeichnet**, daß zumindest zwei Elektroden eingesetzt werden.

2. Verfahren nach Anspruch 1, dadurch gekennzeichnet, daß abschmelzende und/oder nicht-abschmelzende Elektroden verwendet werden.

3. Verfahren nach Anspruch 1 oder 2, dadurch gekennzeichnet, daß jede Elektrode von einem separaten Schutzgasmantel umströmt wird.

4. Verfahren nach Anspruch 1 oder 2, dadurch gekennzeichnet, daß mehrere Elektroden von einem gemeinsamen Schutzgasmantel umströmt werden.

5. Verfahren nach Anspruch 4, dadurch gekennzeichnet, daß alle Elektroden von einem gemeinsamen Schutzgasmantel umströmt werden.

6. Verfahren nach einem der Ansprüche 1 bis 5, dadurch gekennzeichnet, daß die Elektroden an einem elektrischen Potential und/oder an getrennten elektrischen Potentialen angeschlossen werden.

7. Verfahren nach Anspruch 6, dadurch gekennzeichnet, daß Gruppen von Elektroden an einem elektrischen Potential angeschlossen werden.

8. Verfahren nach einem der Ansprüche 1 bis 7, dadurch gekennzeichnet, daß die Elektroden in denselben und/oder unterschiedlichen Ebenen senkrecht zur Laserstrahlachse und/oder parallel zur Werkstückoberfläche angeordnet werden.

9. Verfahren nach einem der Ansprüche 1 bis 8, dadurch gekennzeichnet, daß der oder ein Lichtbogen zwischen einer Elektrode oder mehreren Elektroden und Werkstück und/oder zwischen Elektroden brennt.

10. Vorrichtung zum Schutzgas-Hybridschweißen mittels Laserstrahl und Lichtbogen, umfassend einen Laserschweißkopf zum Zuleiten zumindest eines fokussierten Laserstrahls auf das zu bearbeitende Werkstück, einem Schweißbrenner zur Erzeugung eines elektrischen Lichtbogens mittels einer Elektrode, Mittel zur Zufuhr von Schutzgas und Mittel zur Erzeugung einer Relativbewegung zwischen einerseits dem Laserschweißkopf und dem Brenner und andererseits dem Werkstück, **dadurch gekennzeichnet**, daß zumindest zwei Elektroden vorhanden sind.

11. Vorrichtung nach Anspruch 10, dadurch gekennzeichnet, daß abschmelzende und/oder nicht-abschmelzende Elektroden vorgesehen sind.

12. Vorrichtung nach Anspruch 10 oder 11, dadurch gekennzeichnet, daß eine Anordnung der Mittel zur Zufuhr von Schutzgas vorgesehen ist, so daß jede Elektrode von einem separaten Schutzgasmantel umströmt wird.

13. Vorrichtung nach Anspruch 10 oder 11, dadurch gekennzeichnet, daß eine Anordnung der Mittel zur Zufuhr von Schutzgas vorgesehen ist, so daß mehrere Elektroden von einem gemeinsamen Schutzgasmantel umströmt werden.

14. Vorrichtung nach Anspruch 13, dadurch gekennzeichnet, daß eine Anordnung der Mittel zur Zufuhr von Schutzgas vorgesehen ist, so daß mehrere Elektroden von einem gemeinsamen Schutzgasmantel umströmt werden.

15. Vorrichtung nach einem der Ansprüche 10 bis 14, dadurch gekennzeichnet, daß die Elektroden an einem elektrischen Potential und/oder an getrennten elektrischen Potentialen angeschlossen sind.

16. Vorrichtung nach Anspruch 15, dadurch gekennzeichnet, daß Gruppen von Elektroden an einem elektrischen Potential angeschlossen sind.

17. Vorrichtung nach einem der Ansprüche 10 bis 16, dadurch gekennzeichnet, daß die Elektroden in denselben und/oder unterschiedlichen Ebenen senkrecht zur Laserstrahlachse und/oder parallel zur Werkstückoberfläche angeordnet sind.

18. Vorrichtung nach Anspruch 10 bis 17, dadurch gekennzeichnet, daß der oder ein Lichtbogen zwischen einer Elektrode oder mehreren Elektroden und Werkstück und/oder zwischen Elektroden brennt.
